# EUROPÄISCHE PATENTSCHRIFT

(11) **EP 0 414 082 B1**
(45) Veröffentlichungstag und Bekanntmachung des Hinweises auf die Patenterteilung: **07.12.1994**
(21) Anmeldenummer: 90115459.1
(22) Anmeldetag: 11.08.1990
(51) Int. Cl.: B01D 63/10, B01D 61/08, B01D 61/18, B01D 65/00

(54) **Filterelement zur Aufbereitung einer Flüssigkeit**
Filter element for treating liquid
Elément filtrant pour le traitement d'un liquide

(30) Priorität: 25.08.1989 DE 3928124
(43) Veröffentlichungstag der Anmeldung: 27.02.1991
(73) Patentinhaber: Lauer, Günter, D-79539 Lörrach (DE)
(72) Erfinder: Lauer, Günter, D-79539 Lörrach (DE)
(74) Vertreter: Schmitt, Hans, Dipl.-Ing.

(56) Entgegenhaltungen:
- EP-A- 0 188 224
- US-A- 4 218 317
- US-A- 4 600 512
- US-A- 4 744 900

## Beschreibung

Die Erfindung bezieht sich auf ein Filterelement zur Aufbereitung einer Flüssigkeit gemäß dem Oberbegriff von Anspruch 1. Es ist bereits bekannt, in derartige Filterelemente Wickelmodule zur Umkehrosmose-Filtration oder Ultrafiltration einzusetzen. Solche Wickelmodule bestehen zum Beispiel aus mehreren Flachmembranen, die spiralförmig um ein Filtrat-Sammelrohr aufgewickelt sind. Dabei ist an der einen Stirnseite dieses rohrförmig aufgewickelten Wickelmoduls die Einlaßöffnung angeordnet, während auf der gegenüberliegenden Stirnseite die Auslaßöffnung des Filterelementes vorgesehen ist. Die Einlaß- und die Auslaßöffnung sind meistens in Abschlußkappen untergebracht, die jeweils das stirnseitige Ende des Filterelementes bilden.

Diese als Wickelmodul ausgebildeten Filterelemente sind in einem flüssigkeitsführenden und in der Regel von Wasser durchströmten Druckrohr untergebracht. Dabei ist beispielsweise an den Abschlußkappen jeweils eine Ringnut vorgesehen und in die Ringnut der zuströmseitigen, die Einlaßöffnung des Filterelementes aufweisenden Kappe eine Ringdichtung eingesetzt, die den zwischen dem Wickelmodul und dem Außengehäuse oder Außenrohr gebildeten Ringspalt weitgehend abdichtet.

Die Ringdichtung kann aber auch auf das Filterelement aufgeklebt oder aufgeschoben sein. Das im Druckrohr fließende Wasser oder dergleichen durchströmt somit zwangsläufig das in das Druckrohr eigesetzte Filterelement. Dabei kann ein Teil beispielsweise des zu filternden Wassers durch die Membranen hindurchwandern und sammelt sich - von Salzen oder dergleichen Beimischungen weitgehend befreit - in dem in der Längsachse des Filterelementes zentrisch angeordneten Filtrat-Sammelrohr, von wo es über stirnseitige Anschlußstutzen weitergeleitet werden kann. Ein Teil des zu filternden Wassers durchströmt jedoch - ungefiltert und noch zusätzlich mit den ausgeschiedenen Salzen und dergleichen Beimischungen angereichert - das Filterelement.

Häufig werden auch mehrere dieser Filterelemente in einem gemeinsamen Druckrohr hintereinander angeordnet, wobei die Filtrat-Sammelrohre dieser Filterelemente praktisch in Reihe geschaltet sind.

Mit Hilfe dieser vorbekannten Wickelmodule werden kostengünstige und raumsparende Membrananordnungen ermöglicht. Jedoch ist ein solches Wickelmodul gegen Verunreinigungen und Ausfällungen empfindlich.
Gerade in einem zwischen dem Wickelmodul oder dergleichen Filterelemente und dem Außenrohr oder Außengehäuse angeordneten Ringspalt, der wegen der in seinem zuströmseitigen Bereich vorgesehenen Ringdichtung eine weitgehend strömungsfreie "Totzone" bildet, können sich leicht Bakterien und dergleichen Verunreinigungen bilden und ansammeln.
Über die Einlaß- oder Auslaßöffnungen des Filterelementes können diese Verunreinigungen auch in das Innere des Filterelementes eindringen, das durchströmende Wasser zusätzlich verunreinigen und die Membran- und Filterelementteile angreifen.

Man hat daher bereits ein Filterelement geschaffen, bei dem der zwischen dem Außengehäuse und dem Wickelmodul verbleibende Ringspalt von der Flüssigkeit durchspült ist, um einem Bakterien- und Algenwachstum entgegenzuwirken (vgl.US-A-47 44 900). Bei diesem vorbekannten Filterelement wird jedoch die zwischen der Einströmseite und der Ausströmseite des Wickelmoduls bestehende Druckdifferenz genutzt, um eine Teilmenge der dem Filterelement zugeführten Flüssigkeit am Wickelmodul vorbei über eine Nebenöffnung in den Ringspalt zu führen, von wo die durch den Ringspalt geführte Teilmenge zur Ausströmseite des Filterelementes fließt und dieses zusammen mit dem Konzentrat über einen Flüssigkeits-Auslaß verläßt. Da der Rohwasser-Einlaß somit auf der dem Konzentrat-Auslaß gegenüberliegenden Seite des Filterelementes angeordnet sein muß, weist dieses Filterelement eine dementsprechend große Einbaulänge auf. Zudem muß bei diesem vorbekannten Filterelement die zum Ringspalt führende Nebenöffnung vergleichsweise klein dimensioniert werden, weil bei einer größeren Dimensionierung ein wesentlich größerer Teilstrom den Weg des geringsten Widerstandes gehen und somit am Wickelmodul vorbeigeführt würde, wodurch die Filterleistung dieses vorbekannten Filterelementes nicht unerheblich beeinträchtigt wäre. Über eine solche klein bemessene Nebenöffnung kann jedoch allenfalls nur ein geringfügiger Teilstrom der Flüssigkeit durchgeführt werden, der eine geringere Durchström- und Reinigungsleistung hat.

Auch kennt man bereits ein Filterelement, bei dem der seitlich angeordnete Flüssigkeits-Einlaß des Außengehäuses im Gehäuseinneren unmittelbar hinter der an einem Ende des Wickelmoduls vorgesehenen Ringdichtung mündet, so daß das Rohwasser zunächst über den Ringspalt geführt wird, um anschließend auf der der Ringdichtung abgewandten Seite des Wickelmoduls in dieses einzuströmen. Das vorbekannte Filterelement weist somit ebenfalls auf zwei gegenüberliegenden Stirnseiten seines Außengehäuses den Konzentrat-Auslaß und den Reinwasser-Auslaß auf, während der Rohwasser-Einlaß am Außengehäuse seitlich vorsteht.

Auch dieses vorbekannte Filterelement benötigt somit eine vergleichsweise große Einbaulänge.

Es besteht daher die Aufgabe, ein platzsparendes Filterelement der eingangs erwähnten Art zu schaffen, das weniger anfällig gegen ein Ansammeln von Verunreinigungen am äußeren Umfangsbereich des Wickelmoduls ist und gleichzeitig eine vergleichsweise geringe Einbaulänge aufweist.

Die erfindungsgemäße Lösung dieser Aufgabe besteht bei dem Filterelement der eingangs erwähnten Art in den kennzeichnenden Merkmalen des Anspruches 1.

Bei dem erfindungsgemäßen Filterelement wird ein vergleichsweise großer Flüssigkeitsstrom über den zwischen dem Wickelmodul und dem Außengehäuse vorgesehenen Ringspalt geführt. Dieser reinigende Flüssigkeitsstrom kann erfindungsgemäß über zumindest einen vom Durchströmbereich der Einlaß- und/oder Auslaßöffnungen des Wickelmoduls zum Ringspalt führenden Nebenkanal fließen, dessen Durchtrittsöffnung zum Ringspalt in Strömungsrichtung unmittelbar hinter der Ringdichtung angeordnet ist. Zusätzlich oder stattdessen kann das Filterelement auch als einseitig geschlossener Hohlkörper ausgebildet sein, bei dem nur die dem Gehäuseboden abgewandte Seite des Außengehäuses als hydraulische Anschlußseite ausgebildet ist. Bei dieser bevorzugten Ausführungsform gemäß der Erfindung wird das gesamte, über das Wickelmodul geführte Rohwasser in den Ringspalt eingeleitet, von wo es das Filterelement über einen unmittelbar hinter der Ringdichtung angeordneten Flüssigkeits-Auslaß verläßt. Da das erfindungsgemäße Filterelement hier nur eine hydraulische Anschlußseite aufweist, ist es vergleichsweise platzsparend ausgebildet, - gleichzeitig aber wird auch einem Ansammeln etwaiger Verunreinigungen am äußeren Umfangsbereich des Wickelmoduls wirksam entgegengewirkt.

Im Ringspalt des erfindungsgemäßen Filterelementes können sich praktisch keine strömungsfreien "Totzonen" mehr bilden, die eine Keimbildung und ein Ansammeln anderer Verunreinigungen begünstigen. Das mit einem solchen Filterelement gefilterte Wasser wird daher auch über einen längeren Zeitraum hinweg nicht unnötig mit Keimen oder anderen Verunreinigungen belastet.

Eine Weiterbildung gemäß der Erfindung sieht vor, daß die Einlaß- und/oder Auslaß-Öffnungen des Filterelementes jeweils als düsenartiger Strömungskanal ausgebildet sind mit einem sich allmählich verengenden Querschnittsbereich, und daß die Nebenkanäle von dem verengten Querschnittsbereich der Einlaß- und/oder Auslaßöffnungen zu dem Ringspalt führen.

Durch den sich allmählich verengenden Querschnittsbereich strömt die ständig nachfließende Flüssigkeit mit einer höheren Geschwindigkeit. Dabei herrscht in diesem Bereich gleichzeitig ein geringerer Flüssigkeitsdruck als in den übrigen Bereichen des Filterelements oder des Außenrohres oder -gehäuses. Diese Druckdifferenz wird bei der hier beschriebenen vorteilhaften Ausführungsform zum Ansaugen von Flüssigkeit über den Nebenkanal genutzt. Da diese Flüssigkeit mit Hilfe des Nebenkanals aus dem Ringspalt angesaugt wird, wird auch hier der Ringspalt ständig durchspült und von unnötigen Verunreinigungen gereinigt.

Dabei ist es vorteilhaft, wenn der Nebenkanal in der Ummantelung oder dergleichen Innengehäuse von dem verengten Querschnittsbereich der Einlaß- und/oder Auslaßöffnung zu dem an die Ringdichtung angrenzenden Bereich des Ringspalts geführt ist. Somit wird die Flüssigkeit mit Hilfe der in dem verengten Querschnittsbereich der Einlaß- und/oder Auslaßöffnung herrschenden Druckdifferenz über den Nebenkanal aus dem unmittelbar an die Ringdichtung angrenzenden Bereich des Ringspaltes angesaugt. Der Ringspalt kann somit praktisch vollständig von Flüssigkeit durchströmt und von Verunreinigungen gereinigt werden.

Eine einfache und bevorzugte Ausführungsform sieht dabei vor, daß die Ringdichtung im zuströmseitigen Bereich des Filterelements angeordnet ist, daß nur die Einlaß-Öffnungen des Filterelements als düsenartiger Strömungskanal ausgebildet sind, und daß die an den Ringspalt angrenzenden Durchtrittsöffnungen der zum verengten Querschnittsbereich der Einlaßöffnungen führenden Nebenkanäle in Strömungsrichtung unmittelbar hinter der Ringdichtung angeordnet sind.

Es sei noch erwähnt, daß Wickelmodule eine kostengünstige und raumsparende Membrananordnung begünstigen. Außerdem können mehrere solcher Wickelmodule auch in einem gemeinsamen Außenrohr oder Außengehäuse an ihren einander gegenüberliegenden Anschlußstutzen miteinander verbunden werden.

Weitere Merkmale der Erfindung ergeben sich aus der folgenden Beschreibung von Ausführungsbeispielen der Erfindung in Verbindung mit den Ansprüchen und der Zeichnung. Die einzelnen Merkmale können je für sich oder zu mehreren bei einer Ausführungsform der Erfindung verwirklicht sein.

Es zeigen:
- Fig. 1: ein teilweise aufgeschnittenes Wickelmodul, wie es bei den erfindungsgemäßen Filterelementen verwendet werden kann,
- Fig. 2: in einem schematisch dargestellten Längsschnitt ein Filterelement mit dem Wickelmodul aus Fig. 1, wobei das Wickelmodul in ein flüssigkeitsführendes Druck- oder Außengehäuse eingesetzt ist,
- Fig. 3: ein Filterelement, dessen Einströmöffnung einen sich verengenden Querschnittsbereich aufweist, wobei von diesem Querschnittsbereich ein Nebenkanal zu dem an die Ringdichtung angrenzenden Bereich des Ringspaltes abgeht,
- Fig. 4: ein Filterelement, bei dem mehrere Wickelmodule in einem gemeinsamen Außenrohr hintereinander geschaltet sind, wobei jedoch - im Gegensatz zu Fig. 3 - der sich verengende Querschnittsbereich im Durchströmbereich der Auslaßöffnung vorgesehen ist und
- Fig. 5: den zuströmseitigen Teilbereich eines Wickelmoduls, bei dem von der Einlaßöffnung ein Nebenkanal zu dem hinter der Ringdichtung angeordneten Bereich des Ringspalts führt.

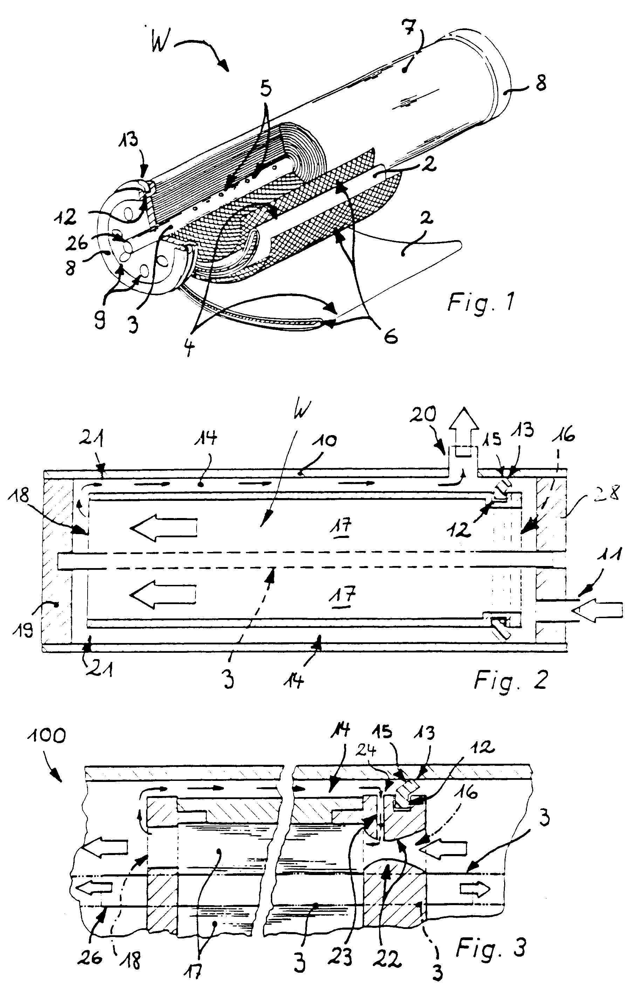

Fig. 1 zeigt ein teilweise aufgeschnittenes Wickelmodul W, bei dem mehrere Flachmembranen 2 spiralförmig um ein zentrisch angeordnetes Filtrat-Sammelrohr 3 gewickelt sind. Diese Flachmembranen 2 sind an ihrem äußeren freien Ende 4 im Querschnitt etwa schlaufenförmig gefaltet, während ihr anderer, an das Sammelrohr 3 angrenzender Endbereich beispielsweise auch eine Lochreihe 5 dieses Sammelrohres 3 umschließt.

Zwischen den einzelnen Flachmembranen 2 und ebenso zwischen den beiden übereinander liegenden Lagen jeder dieser Flachmembranen 2 ist jeweils ein gitterartiger Abstandhalter 6 vorgesehen, der ein gleichmäßiges Durchströmen von Flüssigkeit durch das Wickelmodul ermöglicht.

An seinem Umfangs- oder Mantelbereich ist das rohrförmige Wickelmodul W mit einer Schicht 7 ummantelt. Den stirnseitigen Abschluß des Wickelmoduls W bildet hier eine vorzugsweise aus Kunststoff bestehende und mit der Schicht 7 verbundene Abschlußkappe 8, in die mehrere - je nach Strömungsrichtung - als Einlaß- oder Auslaßöffnungen dienende Durchtrittslöcher 9 vorgesehen sind.

Wie aus der schematischen Darstellung in Fig. 2 erkennbar ist, wird das Wickelmodul W in die Innenhöhlung eines hohlzylinderförmigen Außengehäuses 10 eingesetzt, das über einen Einlaß 11 von Flüssigkeit, insbesondere von Wasser, durchströmt ist. Das Außengehäuse 10 mit wenigstens einem Wickelmodul W darin bildet das Filterelement.

In Fig. 1 und 2 ist erkennbar, daß das Wickelmodul W an zumindest einer, vorzugsweise an beiden seiner Abschlußkappen 8 eine Ringnut 12 hat, in die eine Ringdichtung 13 eingesetzt ist. Diese Ringdichtung 13 kann beispielsweise ein O-Ring oder - wie hier - eine Lippendichtung sein. Bei Filterelementen mit einer geringen Filterleistung kann - beispielsweise aus Kostengründen - auch auf die stirnseitigen Abschlußkappen 8 verzichtet werden; in derartigen Fällen wird die Lippendichtung 13 unmittelbar auf die Schicht 7 aufgeklebt oder aufgeschoben. Sie grenzt oder teilt einen Ringlspalt 14 ab, der zwischen dem Filterelement 1 und dem Außengehäuse 10 vorgesehen ist. Wegen dieser Lippendichtung 13, die mit ihrem freien äußeren Randbereich gegen die Flüssigkeitsströmung gerichtet ist und von dieser somit gegen das Außengehäuse 10 gedrückt wird, wird das Wickelmodul W des Filterelements praktisch zwangsweise über seine stirnseitige Einlaßöffnung 16 durchströmt (vgl. z. B. Fig. 2).
Dabei wandert eine Teilmenge der zu filternden Flüssigkeit auch durch die im Innenbereich 17 des Wickelmoduls W vorgesehenen - in Fig. 2 jedoch nicht dargestellten - Flachmembranen 2 und kann anschließend über das Filtrat-Sammelrohr 3 entnommen werden. Soweit die zu filternde Flüssigkeit jedoch nicht durch die Flachmembranen des Wickelmoduls W hindurch wandert, fließt sie über die an der abströmseitigen Stirnseite angeodnete Auslaßöffnung 18 wieder aus dem Wickelelement W und dem Filterelement ab.

Gegenüber dieser abströmseitigen Stirnseite des Wickelelementes W ist das Außengehäuse 10 als geschlossener Hohlkörper ausgebildet. Somit wird die über die Auslaßöffnung 18 aus dem Filterelement ausströmende Flüssigkeit vom Gehäuseboden 19 umgelenkt und in den Ringspalt 14 eingeleitet, von wo sie über einen in Einströmrichtung unmittelbar hinter der Ringdichtung 13 angeordneten Flüssigkeits-Auslaß 20 wieder abfließen kann. Während dabei dieser Flüssigkeits-Auslaß 20 somit gleichzeitig auch als Spül-Abströmöffnung für den Ringspalt 14 dient, bildet der in Fig. 2 mit 21 gekennzeichnete Bereich dessen Spül-Zuströmöffnung. Der Ringspalt 14 wird somit ständig von Flüssigkeit durchspült; die zu filternde Flüssigkeit durchfließt vollständig das Filterelement und umfließt dabei auch vollständig das Wickelmodul W. Ein Ansammeln von Keimen oder anderen Verunreinigungen wird dadurch praktisch vermieden. Ist der Gehäuseboden beispielsweise durch einen Schraubverschluß gleichzeitig als lösbarer Verschlußdeckel 19 vom Außengehäuse 10 abnehmbar ausgebildet, so kann das Wickelmodul W auf einfche Weise und mit geringem Aufwand dem Außengehäuse 10 entnommen und bedarfsweise gegen ein neues Wickelmodul W ausgetauscht werden.

Das in Fig. 2 gezeigte Filterelement kann auch in umgekehrter Strömungsrichtung vorteilhaft betrieben werden. Dabei wird über den in Fig. 2 als Flüssigkeits-Auslaß 20 bezeichneten Anschluß die zu filternde Flüssigkeit in das Filterelement eingeleitet, die über den Ringspalt 14 in das Wickelmodul W einströmt. Zweckmäßigerweise ist bei dieser - hier nicht besonders dargestellten - Betriebsweise die Lippendichtung 13 "umgedreht" und weist mit ihrem äußeren, an die Innenwand des Außengehäuses 10 angreifenden Randbereich 15 gegen die Strömungsrichtung zum Gehäuseboden 19. Nach Durchströmen des Wickelmoduls W kann die Flüssigkeit aus dem Filterelement über den in Fig. 2 als "Einlaß 11" des Außengehäuses 10 bezeichneten Anschluß abströmen.
Bei einer solchen Ausführungsform mit einer gegenüber Fig. 2 entgegengesetzten Strömungsrichtung würde also der Anschluß 20 als Spül-Zuströmöffnung und der Bereich 21 als Spülabströmöffnung des Ringspaltes 14 dienen.

Auch bei einer solchen Ausführungsform würde der Ringspalt 14 in vorteilhafter Weie ständig durchströmt und von Verunreinigungen gesäubert. Darüber hinaus hat diese Ausführungsform, ebenso wie das in Fig. 2 gezeigte Filterelement, den Vorteil von nur einer hydraulischen Anschlußseite, die einen Frontplatteneinbau ermöglicht. Dadurch wird ein Wechsel des Wickelmoduls W insbesondere, wenn nur eines zu wechseln ist, vereinfacht, darüber hinaus ist eine solche Anordnung platzsparend.
Das in Fig. 2 dargestellte Filterelement kann auch mehrere Einlässe 11 und/oder Flüssigkeitsauslässe 20 an seinem Außengehäuse 10 aufweisen, was eine gute Verteilung der den Ringspalt durchfließenden Strömung begünstigt und einen höheren Volumenstrom von Flüssigkeit auch im Bereich der Auslaßöffnung 18 des Wickelmoduls W sowie eine Minderung des Druckverlustes zur Folge hätte.

In Fig. 3 ist in einem Teil-Querschnitt ein etwas abgewandeltes Filterelement 100 gezeigt, bei dem zumindest die eine, hier sichtbare Einlaß-öffnung 16 als düsenartiger Strömungskanal mit einem sich allmählich verengenden Querschnittsbereich 22 ausgebildet ist. Von diesem verengten Querschnittsbereich 22, der gleichzeitig auch im Durchströmbereich dieser Einlaßöffnung 16 liegt, geht ein zum Ringspalt 14 führender Nebenkanal 23 ab, dessen Durchtrittsöffnung 24 zum Ringspalt 14 in Strömungsrichtung unmittelbar hinter der Ringdichtung 13 vorgesehen ist.

Durch den verengten Querschnittsbereich 22 der Einlaßöffnung 16 strömt die zu filternde Flüssigkeit mit höherer Geschwindigkeit; dabei nimmt gleichzeitig auch der Flüssigkeitsdruck in diesem Bereich ab. Durch die Druckdifferenz zwischen dem verengten Querschnittsbereich 22 des Filterelementes und dem Ringspalt, der annähernd unter dem Druck der an der Auslaß-öffnung 18 austretenden Flüssigkeit steht, wird über den Nebenkanal23 ständig Flüssigkeit aus dem Ringspalt 14 in die Einlaßöffnung 16 eingesaugt. Somit dient hier die Durchtrittsöffnung 24 des Nebenkanals 23 zum Ringspalt 14 als Spül-Abströmöffnung, über die die den Ringspalt 14 durchströmende und ihn säubernde Flüssigkeitsströmung wieder in den Innenbereich 17 des Filterelements einfließen kann.

Das in Fig. 3 dargestellte Filterelement 100 unterscheidet sich von vorstehend erwähnten Filterelementen lediglich durch seine neuartige und besonders vorteilhafte, die besonderen, verengten Einlaßöffnungen 16 des Filterelementes 10 aufweisende Abschlußkappe. Diese Abschlußkappe wird durch den über die Einlaßöffnung 16 eintretenden Zuflußwasserstrom sicher und fest auf den Verbindungsbereich dieser Abschlußkappe mit den übrigen Teilen des Filterelementes 100 aufgedrückt. Die Herstellung eines solchen Filterelementes 100 ist nur mit einem vergleichsweise geringen Mehraufwand verbunden.
Auch bei dem Filterelement 100 wird die zu filternde Flüssigkeit praktisch vollständig zur Durchströmung des Filterelements genutzt. Da ständig auch ein Flüssigkeitsstrom zwischen dem Innenbereich 17 des Filterelementes und dem Ringspalt 14 zirkuliert, erhöht sich die durch den Innenbereich 17 durchströmende Flüssigkeitsmenge noch zusätzlich, ohne daß eine Rezirkulation mit Pumpen notwendig wäre. Die dadurch erreichbare bessere Überströmung des Filterelementes begünstigt dessen Wirksamkeit. Auch bei mehreren hintereinander geschalteten Filterelementen 100 kann ein einfaches flüssigkeitsführendes Druckrohr als Außenrohr der Filterelemente 100 dienen.

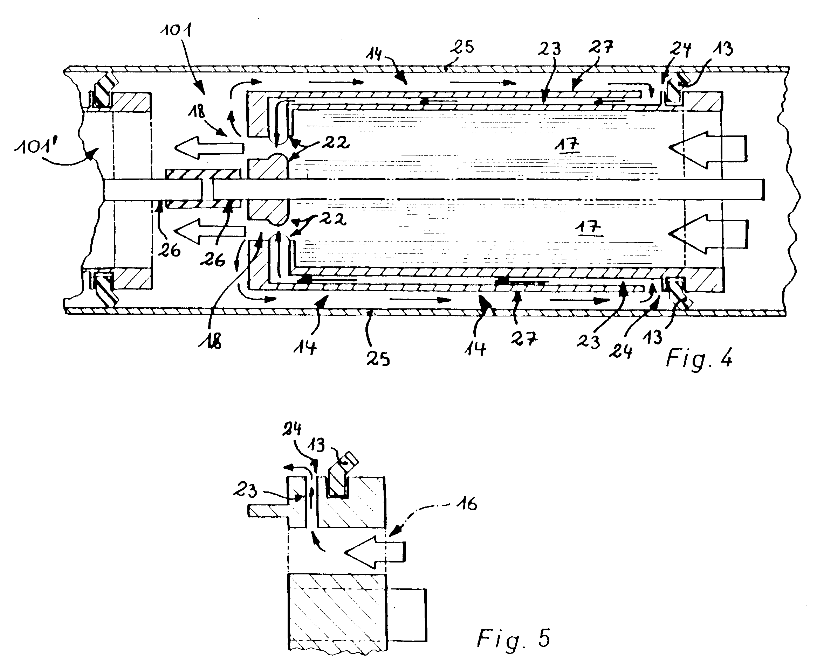

In Fig. 4 ist ein Filterelement 101 in einem Längsschnitt dargestellt, das in eine einfachen, flüssigkeitsführenden Außenrohr 25 eingesetzt und über einen stirnseitigen Anschlußstutzen 26 seines Filtrat-Sammelrohres 3 mit dem benachbarten Anschlußstutzen 26 des Filtrat-Sammelrohres 3 eines nachgeschalteten Filterelements 101′ verbunden ist.
Im Gegensatz zu dem in Fig. 3 gezeigten Filterelement 100 ist bei dem Filterelement 101 die Auslaßöffnung 18 in ihrem Durchströmbereich als düsenartiger Strömungskanal ausgebildet mit einem sich ebenfalls allmählich verengenden Querschnittbereich 22. Dabei führt mindestens ein Nebenkanal in der als Innengehäuse 27 dienenden Ummantelung des Filterelementes 101 von diesem verengten Querschnittsbereich 22 der Auslaßöffnung 18 zu dem an die Ringdichtung 13 angrenzenden Bereich des Ringspaltes 14. Dabei ist auch hier die als Spül-Abströmöffnung dienende durchtrittsöffnung 24 des Nebenkanals 23 zum Ringspalt 14 in Ströungsrichtung der als Hauptstrom zum Filterelement 101 strömenden Flüssigkeit unmittelbar hinter der zuströmseitig am Filterelement 101 angreifenden Ringdichtung 13 angeordnet, so daß durch die Druckdifferenz im Durchströmbereich der Auslaßöffnung 18 gegenüber dem Ringspalt 14 ständig Flüssigkeit über den Nebenkanal in die Auslaßöffnung eingesaugt wird und somit eine ständige, säubernde Strömung durch den Rinspalt 14 fließt.

Wie Fig. 4 zeigt, weist das Filterelement 101 u. a. mehrere Auslaßöffnungen 18 auf mit jeweils einem solchen Nebenkanal 23. Diese Nebenkanäle werden beispielsweise durch auf die spiralförmig umwickelten Flachmembranen auflamierten Röhrchen oder durch in die als Innengehäuse 27 dienende Laminat-Ummantelung eingebettete Röhrchen gebildet.
Bei dem Filterelement 101 wird die durch den Ringspalt 14 strömende Flüssigkeit nicht zur Zwangsöberströmung der Filterflächen herangezogen. Demgegenüber wird das in Fig. 2 dargestellte Filterelement praktisch mit dem vollständigen Volumen der zu filternden Flüssigkeit beaufschlagt, so daß im Innenbereich 17 des Filterelementes enthaltene Verunreinigungen ausgeschwemmt werden und ein Verstopfen des Filterelementes 1 mangels ausreichender Überströmung vermieden wird.

IN Fig. 5 ist in einem Teil-Längsschnitt ein Filterelement im Bereich seiner Einlaßöffnung 16 dargestellt. Deutlich zu erkennen ist die zuströmseitig angeordnete Ringdichtung 13. Dabei führt vom Durchströmbereich der einen etwa einheitlichen Querschnitt aufweisenden Einlaßöffnung 16 ein Nebenkanal 23 zum Ringsaplt 14, dessen Durchtrittsöffnung 24 zum Ringspalt 14 als Spül-Zuströmöffnung für den Ringspalt 14 dient. Diese Durchtrittsöffnung 24 ist in Fig. 5 ebenfalls in Strömungsrichtung des Hauptstromes der Flüssigkeit unmittelbar hinter der Ringdichtung 13 angeordnet.
Auch mit Hilfe dieses einfachen Nebenkanals 23 läßt sich eine gute Durchströmung des Ringspaltes erzielen. Da die Einlaßöffnung 16 des Filterelementes praktisch einen gleichmäßigen Querschnitt hat, entsteht praktisch kein Druckverlust. Allerdings fließt eine - durch den Querschnitt des Nebenkanals 23 definierte - Teilmenge der zu filternden Flüssigkeit über den Nebenkanal 23, an dem - die Membranen aufweisenden - Innenbereich 17 (vgl. Fig. 1) ungefiltert vorbei. Im Gegensatz zu dem in Fig. 3 dargestellten Filterelement 100 bewirkt der in Fig. 5 gezeigte einfache Nebenkanal 23 keine vollständige Ausnutzung der in das Filterelement einströmenden Flüssigkeit zur Überströmung der Filterfläche (Membran) und damit möglicht hohen Ausspülung von Inhaltsstoffen aus dem Innenbereich 17.

Die Erfindung kann nicht nur bei den hier dargestellten Wickelmodulen W vorteilhaft verwendet werden, sondern bei allen Filterelementen, die unter Bildung eines Ringspaltes in ein Außenrohr oder Außengehäuse eingesetzt werden und die beispielsweise zur Umkehrosmose, zur Ultrafiltration oder Mikrofiltration dienen.

Alle vorbeschriebenen oder in den Ansprüchen aufgeführten Einzelmerkmale können einzeln oder in beliebiger Kombination miteinander erfindungswesentlich sein.

## Patentansprüche

1. Filterelement zur Aufbereitung einer Flüssigkeit, insbesondere von Wasser, mit Hilfe zumindest eines von der zu reinigenden Flüssigkeit durchspülten Wickelmoduls (W) zur Umkehrosmose-Filtration oder Ultrafiltration sowie mit einem das Wickelmodul aufnehmenden Außengehäuse (10), welches wenigstens einen Flüssigkeits-Einlaß (11) und mindestens einen Flüssigkeits-Auslaß (20) aufweist, wobei zwischen dem Außengehäuse (10) und dem Wickelmodul (W) ein mittels einer Ringdichtung (13) einseitig geschlossener und von der Flüssigkeit durchspülter Ringspalt (14) vorgesehen ist und wobei das Wickelmodul (W) ein aus dem Außengehäuse (10) führendes zentrales Filtrat-Sammelrohr (3) hat, **dadurch gekennzeichnet,** daß das Filterelement als einseitig geschlossener Hohlkörper ausgebildet ist, daß das Filterelement (1) dazu auf seiner einem Gehäuseboden (19) abgewandten Seite des Außengehäuses (10) seine hydraulische Anschlußseite hat, daß die Ringdichtung (13) im zuströmseitigen Bereich des Filterelementes angeordnet ist und daß der auch als Spül-Abströmöffnung für den Ringspalt (14) vorgesehene Flüssigkeits-Auslaß (20) des Außengehäuses (10) in Strömungsrichtung unmittelbar hinter der Ringdichtung (13) angeordnet ist,
und/oder daß vom Durchströmbereich der Einlaß- und/oder Auslaßöffnungen (16,18) des Wickelmoduls (W) zumindest ein zum Ringspalt (14) führender Nebenkanal (23) abgeht, dessen Durchtrittsöffnung (24) zum Ringspalt (14) als Spül-Zuström- oder Spül-Abströmöffnung dient und die Durchtrittsöffnung (24) dazu in Strömungsrichtung hinter der Ringdichtung (13) angeordnet ist.

2. Filterelement nach Anspruch 1, dadurch gekennzeichnet, daß das Wickelmodul (W) mit einer geschlossenen Mantelschicht umhüllt sowie vorzugsweise stirnseitig mit je einer Abschlußkappe (8) versehen ist.

3. Filterelement nach Anspruch 1 oder 2, dadurch gekennzeichnet, daß die zuströmseitige Stirnseite (28) des Filterelementes als lösbarer Verschlußdeckel ausgebildet ist.

4. Filterelement nach einem der Ansprüche 1 bis 3, dadurch gekennzeichnet, daß die Einlaß- und/oder Auslaßöffnungen (16,18) des Filterelementes (100, 101) jeweils als düsenartiger Strömungskanal ausgebildet sind mit einem sich allmählich verengenden Querschnittsbereich (22), und daß die Nebenkanäle (23) von dem verengten Querschnittsbereich (22) der Einlaß- und/oder Auslaßöffnungen (16,18) zu dem Ringspalt (14) führen.

5. Filterelement nach Anspruch 4, dadurch gekennzeichnet, daß der Nebenkanal (23) in der Ummantelung oder dergleichen Innengehäuse (27) von dem verengten Querschnittsbereich (22) der Einlaß- und/oder Auslaßöffnung (16,18) zu dem an die Ringdichtung (13) angrenzenden Bereich des Ringspaltes (14) geführt ist.

6. Filterelement nach Anspruch 4 oder 5, dadurch gekennzeichnet, daß die Ringdichtung (13) im zuströmseitigen Bereich des Filterelements (100) angeordnet ist, daß nur die Einlaßöffnungen (16) des Filterelementes (100) als düsenartiger Strömungskanal ausgebildet sind, und daß die an den Ringspalt (14) angrenzenden Durchtrittsöffnungen (24) der zum verengten Querschnittsbereich (22) der Einlaßöffnungen (16) führenden Nebenkanäle (23) in Strömungsrichtung vorzugsweise unmittelbar hinter der Ringdichtung (13) angeordnet sind.

## Claims

1. A filter element for treating liquid, particularly water, with the aid of at least one wound module W flushed by the liquid to be purified for reverse osmosis filtration or ultrafiltration, including an outer housing (10) which receives the wound module and has at least one liquid inlet (11) and at least one liquid outlet (20), provided between the outer housing (10) and the wound module (W) there being an annular gap (14) which is closed on one side by means of a ring seal (13) and is flushed by the liquid, and the wound module (W) having a central filtrate collecting tube (3) leading out of the outer housing (10), **characterized in that**
the filter element takes the form of a hollow body closed on one side, that the filter element (1) has its hydraulic connecting side on the side of the outer housing (10) averted from the housing base (19), that the ring seal (13) is arranged in the filter element zone on the inflow side, and that the liquid outlet (20) of the outer housing (10) also provided as flush liquid outflow opening for the annular gap (14) is arranged directly behind the ring seal (13) in the direction of flow, and/or that at least one side passage (23) departs from the flow area of the inlet and/or outlet openings (16, 18) of the wound module (W) and leads to the annular gap (14), the opening (24) of said side passage to the annular gap (23) serving as flush liquid inflow or flush liquid outflow opening and being arranged behind the ring seal (13) in the direction of flow.

2. A filter element as claimed in claim 1, characterized in that the wound module (W) is enveloped with a closed covering layer and is preferably provided with one end cap (8) at each face.

3. A filter element as claimed in claim 1 or claim 2, characterized in that the filter element face (28) on the inflow side takes the form of a detachable closure.

4. A filter element as claimed in one of claims 1 to 3, characterized in that the inlet and/or outlet openings (16, 18) of the filter element (100, 101) in each case take the form of a nozzle-like flow passage with a gradually contracting cross sectional zone (22), and that the side passages (23) lead from the contracted cross sectional zone (22) of the inlet and/or outlet openings (16, 18) to the annular gap (14).

5. A filter element as claimed in claim 4, characterized in that the side passage (23) in the casing or like inner housing (23) leads from the contracted cross sectional zone (22) of the inlet and/or outlet opening (16, 18) to the zone of the annular gap (14) bordering on the ring seal (13).

6. A filter element as claimed in claim 4 or claim 5, characterized in that the ring seal (13) is arranged in the inflow zone of the filter element (100), that only the inlet openings (16) of the filter element (100) take the form of a nozzle-like flow passage, and that the openings (24) which border on the annular gap (14) and belong to the side passages (23) leading to the contracted cross sectional zone (22) of the inlet openings (16) are preferably arranged directly behind the ring seal (13) in the direction of flow.

## Revendications

1. Elément filtrant pour le traitement d'un liquide, notamment d'eau, à l'aide d'au moins un module enroulé (W) à travers lequel s'écoule le liquide à épurer afin de le filtrer par osmose inverse ou ultrafiltration, ainsi que d'un boîtier extérieur (10) qui reçoit le module enroulé et présente au moins une entrée de liquide (11) et au moins une sortie de liquide (20), un espace annulaire (14), fermé d'un côté par un joint d'étanchéité annulaire (13) et à travers lequel s'écoule le liquide, étant prévu entre le boîtier extérieur (10) et le module enroulé (W), et le module enroulé (W) possédant un tube central (3) collecteur de filtrat, qui mène hors du boîtier extérieur (10), **caractérisé** en ce que l'élément filtrant est réalisé sous la forme d'un corps creux fermé d'un côté, en ce que l'élément filtrant (1) possède à cet effet son côté de raccordement hydraulique sur le côté du boîtier extérieur (10) qui est opposé à un fond de boîtier (19), en ce que le joint d'étanchéité annulaire (13) est disposé dans la région du côté d'entrée de l'élément filtrant , et en ce que la sortie de liquide (20) du boîtier extérieur (10), également prévue comme ouverture de sortie de rinçage pour l'espace annulaire (14), est disposée juste après le joint d'étanchéité annulaire (13) dans la direction d'écoulement,
et/ou en ce qu'au moins un canal secondaire (23), menant à l'espace annulaire (14), part de la région d'écoulement passant des ouvertures d'entrée et/ou de sortie (16, 18) du module enroulé (W), canal dont l'ouverture (24) de passage dans l'espace annulaire (14) sert d'ouverture d'entrée ou de sortie de rinçage, l'ouverture de passage (24) étant à cet effet disposée après le joint d'étanchéité annulaire (13) dans la direction d'écoulement.

2. Elément filtrant selon la revendication 1, **caractérisé** en ce que le module enroulé (W) est enrobé d'une couche d'enveloppe fermée et est, de préférence, pourvu d'un chapeau de terminaison respectif (8) sur ses côtés frontaux.

3. Elément filtrant selon la revendication 1 ou 2, **caractérisé** en ce que le côté frontal d'entrée (28) de l'élément filtrant est réalisé sous la forme d'un couvercle de fermeture amovible.

4. Elément filtrant selon l'une quelconque des revendications 1 à 3, **caractérisé** en ce que les ouvertures d'entrée et/ou de sortie (16, 18) de l'élément filtrant (100, 101) sont chacune réalisées sous la forme d'un canal d'écoulement du genre buse avec une région (22) dont la section se rétrécit progressivement, et en ce que les canaux secondaires (23) mènent de la région de section rétrécie (22) des ouvertures d'entrée et/ou de sortie (16, 18) dans l'espace annulaire (14).

5. Elément filtrant selon la revendication 4, **caractérisé** en ce que le canal secondaire (23) est guidé, dans l'enveloppe ou boîtier intérieur (27) analogue, depuis la région de section rétrécie (22) de l'ouverture d'entrée et/ou de sortie (16, 18) jusque dans la région de l'espace annulaire (14) qui est attenante au joint d'étanchéité annulaire (13).

6. Elément filtrant selon la revendication 4 ou 5, **caractérisé** en ce que le joint d'étanchéité annulaire (13) est disposé dans la région d'entrée de l'élément filtrant (100), en ce que seules les ouvertures d'entrée (16) de l'élément filtrant (100) sont réalisées sous forme de canal d'écoulement du genre buse, et en ce que les ouvertures de passage (24), attenantes à l'espace annulaire (14), des canaux secondaires (23) menant à la région de section rétrécie (22) des ouvertures d'entrée (16), sont de préférence disposées juste après le joint d'étanchéité annulaire (13) dans la direction d'écoulement.
